# FASCICULE DE BREVET EUROPEEN

(11) **EP 1 022 343 B1**
(45) Date de publication et mention de la délivrance du brevet: **25.06.2003**
(21) Numéro de dépôt: 00400131.9
(22) Date de dépôt: 19.01.2000
(51) Int. Cl.: C13D 3/06, C13D 3/02

(54) **Procédé d'épuration d'un jus sucré et installation de mise en oeuvre du procédé**
Verfahren zur Reinigung von Zuckersäften und Vorrichtung zur Durchführung des Verfahrens
Process for purification of sugar juices and apparatus for carrying out this process

(30) Priorité: 21.01.1999 FR 9900651
(43) Date de publication de la demande: 26.07.2000
(73) Titulaire: MAGUIN S.A., F-02800 Charmes (FR)
(72) Inventeur: Guyot, Robert, 78170 La Celle St. Cloud (FR)
(74) Mandataire: Casalonga, Axel

(56) Documents cités:
- EP-A- 0 550 786
- FR-A- 1 553 443
- US-A- 4 795 494
- US-A- 5 480 490

## Description

La présente invention concerne d'une manière générale un procédé d'épuration des jus sucrés, en particulier des jus sucrés issus de betteraves sucrières, qui permet une diminution très importante de la consommation de chaux, pouvant atteindre, jusqu'à 70% de la consommation en chaux des usines de traitement actuelles.

La présente invention a donc pour objet un procédé d'épuration d'un jus sucré permettant une moindre consommation de chaux ainsi qu'un dispositif pour la mise en oeuvre de ce procédé.

En outre, le procédé de l'invention peut être mis en oeuvre dans des installations d'épuration existantes au moyen d'une extension mineure des installations existantes et sans modification des dispositifs de production de chaux, de pompage de gaz carbonique et de première carbonatation.

US-A-4 795 494 décrit un procédé d'épuration d'un jus sucré comprenant un traitement de préchaulage suivi par une séparation des boues. Le surnageant et la jus sucré additionellement separé des boues sont combinés après le chaulage du surnageant et avant la première carbonatation .

Selon l'invention, le procédé d'épuration d'un jus sucré, en particulier d'un jus sucré de betterave, comprend une séquence principale de traitements comportant successivement un traitement de préchaulage du jus sucré, un traitement de chaulage du jus préchaulé, au moins deux traitements successifs de carbonatation du jus chaulé, et éventuellement un traitement de sulfitation entre les traitements de carbonatation, ledit procédé d'épuration étant caractérisé en ce qu'il comprend une séquence secondaire de traitements consistant à :
a) dériver une fraction du jus sucré préchaulé de la séquence principale représentant 10 à 70% (de préférence 30 à 50%) en volume du jus sucré préchaulé total de la dite séquence principale ;
b) soumettre la fraction dérivée du jus sucré préchaulé à un traitement de coagulation ;
c) ajouter au jus sucré, préchaulé et coagulé issu de l'étape b) un agent de floculation et soumettre la fraction de jus sucré additionné d'agent de floculation à une décantation pour séparer d'une part un jus sucré clair secondaire et d'autre part des boues secondaires ; et
d) recycler le jus sucré clair secondaire issu de l'étape c) dans la séquence principale de traitements soit avant ou après le premier traitement de carbonatation mais avant le second traitement de carbonatation, soit avant le traitement de sulfitation du jus clair et le second traitement de carbonatation.

Dans le cas d'un recyclage du jus clair secondaire avant première carbonatation, la fraction de jus recyclée est introduite de préférence après le traitement de chaulage de la séquence principale sans nécessité d'ajout de chaux au jus clair secondaire recyclé.

Dans le cas du recyclage du jus secondaire après la première carbonatation, une très faible quantité de chaux peut être introduite dans le jus clair secondaire avant la deuxième carbonatation ou avant le traitement de sulfitation dans les sucreries sulfitant le jus clair avant la deuxième carbonatation.

Les boues secondaires obtenues de l'étape c) de décantation sont de préférence mélangées à la fraction non recyclée au préchaulage des boues issues de la première carbonatation au moyen d'une étape de filtration pour extraire un filtrant additionnel qui peut être réintroduit de préférence avant la première carbonatation ou avant la deuxième carbonatation (par exemple avec le jus clair secondaire).

De préférence encore, la séquence principale de traitements du procédé d'épuration selon l'invention comprend après le traitement de première carbonatation, successivement, un traitement de séparation du jus sucré trouble obtenu après ce premier traitement de carbonatation pour en séparer un premier jus clair principal et des boues de première carbonatation et éventuellement un traitement de sulfitation du premier jus clair principal avant de le soumettre au traitement de deuxième carbonatation. Une partie des boues de première carbonatation sont généralement recyclées à l'étape de préchaulage.

Le jus trouble de deuxième carbonatation est généralement soumis à un traitement de séparation pour séparer un deuxième jus clair et des boues de seconde carbonation. Le deuxième jus clair peut être soumis à un traitement de décalcification et éventuellement à une sulfitation et une addition de bisulfite de sodium avant d'être soumis à un traitement d'évaporation.

L'invention concerne également une installation pour la mise en oeuvre du procédé d'épuration d'un jus sucré tel que décrit ci-dessus comportant un ensemble principal de traitement comprenant en série une unité de préchaulage, une unité de chaulage et au moins une première et une seconde unité de carbonatation, caractérisée en ce qu'elle comprend également un ensemble secondaire de traitement comprenant un moyen pour dériver une fraction du jus sucré préchaulé de l'unité de préchaulage et représentant 10 à 70% (de préférence 30 à 50%) en volume du jus sucré préchaulé total ;
un moyen de coagulation recevant simultanément la fraction dérivée de jus sucré préchaulé et un agent de coagulation ;
un moyen pour introduire simultanément la fraction dérivée de jus sucré coagulé et un agent de floculation dans un moyen de décantation dans lequel on sépare d'une part un jus sucré clair secondaire et d'autre part des boues secondaires ; et
un moyen pour réintroduire le jus sucré clair secondaire dans l'ensemble principal de traitement en amont de la première unité de carbonatation ou entre la première et la seconde unité de carbonatation.

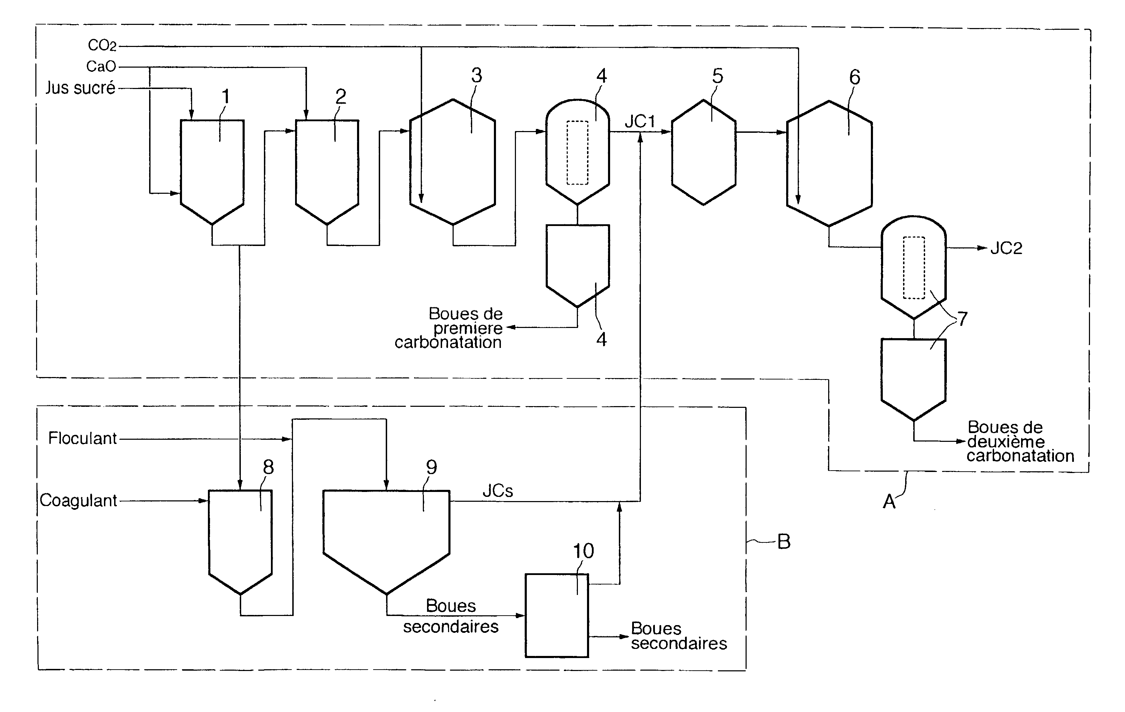

La suite de la description se réfère à la figure annexée qui représente schématiquement un exemple d'installation d'épuration selon l'invention.

Sur la figure, on a représenté une installation d'épuration selon l'invention qui comprend un ensemble principal d'unités de traitement A et un ensemble secondaire d'unités de traitement B, selon l'invention.

L'ensemble principal A comprend successivement une unité de préchaulage 1, une unité de chaulage 2, une unité de première carbonatation 3, une unité de séparation 4 d'un premier jus clair principal JC1 et de boues de première carbonatation, une unité de sulfitation 5, une unité de seconde carbonatation 6 et une unité de séparation 7 d'un second jus clair principal JC2 et des boues de deuxième carbonatation.

L'ensemble principal qui vient juste d'être décrit constitue en fait une installation d'épuration classique des jus sucrés tels que les jus de betteraves.

En fonctionnement, un jus sucré obtenu par tout procédé d'extraction classique, par exemple un jus sucré de diffusion est introduit dans l'unité de préchaulage 1 où il est mélangé avec plusieurs produits, à savoir un pourcentage variable des boues de première carbonatation recyclées (en général 30 à 50% en poids), éventuellement les boues de deuxième carbonatation, comme on le verra par la suite, et si nécessaire une faible quantité de lait de chaux. Le temps de séjour dans l'unité de préchaulage est généralement d'environ 20 minutes mais peut varier en fonction des conditions de chaulage, en particulier la température de chaulage. Le jus préchaulé de l'unité de préchaulage 1 est alors introduit dans l'unité de chaulage 2 où il est mélangé avec une quantité importante de chaux (CaO) représentant en général une addition de 15 à 24 g de CaO par tonne de betteraves.

Le jus chaulé est en général réchauffé à une température de l'ordre de 83-85°C et envoyé dans une unité de première carbonatation 3 où il est mélangé avec du CO₂ provenant d'un four à chaux. Le premier jus trouble JT1 provenant de l'unité de première carbonatation est amené alors dans une unité de séparation 4 comprenant par exemple des filtres épaississeurs ou des décanteurs pour séparer un premier jus clair JC1 et des boues de première carbonatation, boues éventuellement en partie recyclées dans l'unité de préchaulage 1.

La fraction recyclée des boues de première carbonatation est déterminée de manière à optimiser l'efficacité de l'épuration. Les boues de première carbonatation non recyclées sont envoyées sur des filtres désucreurs (non représentés), par exemple des filtres presses, pour en séparer des écumes désucrées qui peuvent ensuite être utilisées comme amendement calcaire en culture.

Le premier jus clair JC1 peut être éventuellement introduit dans une unité de sulfitation 5. Le jus clair JC1, éventuellement sulfité, est alors réchauffé à une température de l'ordre de 92-95°C et introduit dans une unité de seconde carbonatation 6 où il est à nouveau traité avec du gaz carbonique et subit une carbonatation complémentaire jusqu'à un pH de 9 à 9,3 en général.

Le jus trouble de seconde carbonatation JT2 est alors envoyé sur une unité de séparation 7, généralement analogue à la précédente où on sépare un second jus clair JC2 des boues de deuxième carbonatation. Les boues de deuxième carbonatation séparées dans l'unité de séparation 7 peuvent être éventuellement recyclées au moins en partie en amont de l'unité de première carbonatation 3 dans l'unité de préchaulage 1 ou dans une unité de maturation éventuelle (non représentée) généralement située immédiatement après l'unité de chaulage 2.

Le jus clair JC2 peut alors subir diverses opérations classiques telles qu'une sulfitation (traitement SO₂), une décalcification et l'adjonction de bisulfite de sodium avant passage sur une unité d'évaporation multiple (non représentée) pour être cristallisé.

Les sulfitations des jus clairs JC1 et JC2 ou l'adjonction de bisulfite de sodium ont pour but d'assurer une décoloration complémentaire du jus final.

En variante, pour la décoloration des jus on peut utiliser des traitements avec du charbon actif.

Selon l'invention, on prévoit un ensemble secondaire B d'unités de traitement qui comprend une unité de coagulation 8 et une unité de décantation 9.

Selon l'invention, un moyen de dérivation telle qu'une vanne permet de dériver une fraction du jus préchaulé, représentant 10 à 70% en volume du jus préchaulé total de la séquence principale de traitements, vers l'unité de coagulation 8 où la fraction dérivée du jus préchaulé est mélangée à un agent de coagulation. La quantité d'agent de coagulation généralement utilisée est de 2 à 5 ppm. De préférence, la fraction dérivée de jus préchaulé est réchauffée à un température de 80°C ou plus (généralement 80-83°C environ) avant la coagulation et le temps de coagulation est généralement compris entre 15 et 30 minutes.

Le jus coagulé dans l'unité de coagulation 8 est ensuite acheminé, additionné d'un agent de floculation, généralement en une quantité de 2 à 5 ppm, jusqu'à une unité de décantation 8 où on sépare un jus clair secondaire JCs et des boues secondaires. Le temps de séjour dans l'unité de décantation est généralement de l'ordre de 20 à 30 minutes. Le jus clair secondaire est alors recyclé dans la séquence principale de traitement, pour la réalisation représentée en amont de l'unité de seconde carbonatation 6 et de préférence immédiatement en amont de l'unité de sulfitation 5. Bien évidemment, comme indiqué précédemment, le jus clair secondaire JCs pourrait être recyclé en amont de la première unité de carbonatation 3 et l'unité de sulfitation 5 omise.

D'autre part, les boues secondaires éventuellement mélangées à une fraction non recyclée des boues de première carbonatation sont acheminées depuis l'unité de décantation 9 vers une unité de séparation 10, par exemple un filtre-presse, pour filtration et désucrage avec obtention d'une part d'écumes désucrées et d'autre part d'un filtrat généralement recyclé avec le jus clair secondaire JCs issu de l'unité de décantation 9, soit en amont de l'unité de première carbonatation 3, soit entre la première et la deuxième unité de carbonatation.

Eventuellement, on peut rajouter avec le coagulant dans l'unité de coagulation 8 une petite quantité de chaux, si nécessaire, généralement 1 g/litre ou moins.

Un intérêt important du procédé et de l'installation, selon l'invention, réside dans une diminution très importante de la consommation de chaux, proportionnelle au pourcentage de jus traité dans l'ensemble secondaire B.

Dans le cadre d'une extension des installations, l'ensemble secondaire d'unités de traitement peut être réalisé sans modification des installations de production de chaux, de pompage de gaz CO2 et de l'unité de première carbonatation.

En outre, le procédé permet d'obtenir la même efficacité globale de traitement d'épuration que le procédé classique (pureté et coloration du jus clair de deuxième carbonatation).

Enfin, ce procédé selon l'invention diminue les rejets tels que les écumes de première carbonatation (10 à 25 kg en moins par tonne de betteraves traitées) et donc du CO₂ rejeté dans l'atmosphère.

La perte en sucre dans les écumes est réduite dans la même proportion que la quantité d'écumes.

## Revendications

1. Procédé d'épuration d'un jus sucré, en particulier d'un jus sucré de betteraves, comprenant une séquence principale de traitements successifs (A), comportant un traitement de préchaulage (1) du jus sucré, un traitement de chaulage (2) du jus sucré préchaulé, et au moins deux traitements successifs de carbonatation (3, 6), **caractérisé en ce qu'**il comprend une séquence secondaire de traitements (B) consistant à :
a) dériver une fraction du jus sucré préchaulé représentant 10 à 70% en volume du jus sucré préchaulé total ;
b) soumettre la fraction dérivée de jus sucré préchaulé à un traitement de coagulation (8) avec un agent de coagulation ;
c) soumettre le jus sucré coagulé à une décantation (9) avec addition d'un agent de floculation pour séparer un jus sucré clair secondaire (JCs) de boues secondaires ; et
d) recycler le jus sucré clair secondaire (JCs) dans la séquence principale de traitements avant ou après le traitement de première carbonatation mais avant le traitement de seconde carbonatation.

2. Procédé selon la revendication 1, **caractérisé en ce que** les boues secondaires issues de l'étape c) mélangées ou non à des boues de première carbonatation non recyclées sont soumises à un traitement de filtration pour en extraire un filtrat qui est recyclé dans la séquence principale de traitements.

3. Procédé selon l'une quelconque des revendications précédentes, **caractérisé en ce que** la fraction de jus sucré préchaulé dérivée représente 10 à 50% en volume du jus sucré total préchaulé.

4. Procédé selon l'une quelconque des revendications 1 à 3, **caractérisé en ce que** le jus sucré clair secondaire (JCs) est réintroduit dans la séquence principale de traitements avant le traitement de première carbonatation.

5. Procédé selon l'une quelconque des revendications 1 à 3, **caractérisé en ce que** la séquence principale de traitements comprend après le traitement de première carbonatation et avant le traitement de seconde carbonatation un traitement de sulfitation (5) et **en ce que** le jus sucré clair secondaire est réintroduit dans la séquence principale de traitements, après la première carbonatation et avant le traitement de sulfitation.

6. Installation d'épuration d'un jus sucré pour la mise en oeuvre du procédé d'épuration selon l'un quelconque des revendications précédentes, **caractérisé en ce qu'**il comprend :
. un ensemble principal (A) d'unités de traitement comprenant une unité de préchaulage (1),
. une unité de chaulage (2),
. une unité de première carbonatation (3),
. une unité de séparation (4), et
. une unité de seconde carbonatation (6), et un ensemble secondaire (B) d'unités de traitement comprenant :
- un moyen pour dériver une fraction de jus sucré préchaulé dans l'unité de préchaulage (1) représentant 10 à 70% en volume du jus sucré préchaulé total,
- une unité de coagulation (8) recevant simultanément une fraction dérivée de jus sucré préchaulé et un agent de coagulation,
- une unité de décantation (9) recevant le jus sucré coagulé additionné d'un agent de floculation pour séparer et récupérer d'une part un jus sucré clair secondaire (JCs) et d'autre part des boues secondaires, et
- un moyen pour réintroduire le jus sucré clair secondaire dans l'ensemble principal d'unités de traitement, soit en amont de l'unité de première carbonatation (3), soit entre cette dernière et l'unité de seconde carbonatation (6).

7. Installation selon la revendication 6, **caractérisée en ce qu'**elle comprend en outre une unité de traitement (10) des boues secondaires pour en extraire un filtrat et un moyen pour réunir ce filtrat au jus sucré clair secondaire issu de l'unité de décantation (9).

8. Installation selon l'une quelconque des revendications 6 à 7, **caractérisée en ce que** l'ensemble principal (A) d'unités de traitement comprend en outre une unité de sulfitation (8) en aval de l'unité de séparation (4) et en amont de l'unité de deuxième carbonatation (6) et **en ce que** le moyen de réintroduction du jus sucré clair secondaire dans l'ensemble principal (A) réintroduit le jus sucré clair secondaire en amont de l'unité de sulfitation (5).

## Patentansprüche

1. Verfahren zum Reinigen von Zuckersaft, insbesondere von Zuckerrübensaft mit einer Hauptfolge aufeinanderfolgender Behandlungsschritte (A), die eine Vorkalkungsbehandlung (1) des Zuckersafts, eine Kalkungsbehandlung (2) des vorgekalkten Zuckersafts und wenigstens zwei sich anschließende Karbonatationsbehandlungen (3,6) aufweist, **dadurch gekennzeichnet, dass** es eine sekundäre Behandlungsschrittfolge (B) umfasst, die besteht aus:
a) Abzweigen einer Fraktion von vorgekalktem Zuckersaft, die 10 bis 70 Volumenprozent des gesamten vorgekalkten Zuckersafts ausmacht;
b) Unterziehen der abgeleiteten Fraktion vorgeka-lkten Zuckersafts einer Koagulationsbehandlung (8) mit einem Koagulationsmittel;
c) Unterziehen des koagulierten Zuckersafts einer Dekantierung (9) unter Zugabe eines Ausflockmittels, um einen klaren, sekundären Zuckersaft (JCs) von Sekundärschlämmen abzuscheiden; und
d) Recyclen des klaren, sekundären Zuckersafts (JCs) in die Hauptbehandlungsschrittfolge vor oder nach der ersten Karbonatationsbehandlung, aber vor der zweiten Karbonatationsbehandlung.

2. Verfahren nach Anspruch 1, **dadurch gekennzeichnet, dass** die bei dem Schritt c) angefallenen, ggfs. nicht recycelten Schlämmen der ersten Karbonatation zugemischten Sekundärschlämme einer Filtrationsbehandlung unterzogen werden, um ein Filtrat abzuscheiden, das in die Hauptbehandlungsschrittfolge recycelt wird.

3. Verfahren nach einem der vorhergehenden Ansprüche, **dadurch gekennzeichnet, dass** die abgezweigte Fraktion vorgekalkten Zuckersafts 10 bis 50 Volumenprozent des gesamten vorgekalkten Zuckersafts ausmacht.

4. Verfahren nach einem der Ansprüche 1 bis 3, **dadurch gekennzeichnet dass** der klare, sekundäre Zuckersaft (JCs) in die Hauptbehandlungsschrittfolge vor der ersten Karbonatationsbehandlung zurückgeführt wird.

5. Verfahren nach einem der Ansprüche 1 bis 3, **dadurch gekennzeichnet, dass** die Hauptbehandlungsschrittfolge nach der ersten Karbonatationsbehandlung und vor der zweiten Karbonatationsbehandlung eine Sulfitierungsbehandlung (5) enthält und dass der klare, sekundäre Zuckersaft nach der ersten Karbonatation und vor der Sulfitierungsbehandlung in die Hauptbehandlungsschrittfolge zurückgeführt wird.

6. Zuckersaftreinigungsanlage zur Durchführung des Reinigungsverfahrens nach einem der vorhergehenden Ansprüche, **dadurch gekennzeichnet, dass** sie aufweist:
- eine Hauptanordnung (A) von Behandlungseinheiten, die enthält:
- eine Vorkalkungseinheit (1)
- eine Kalkungseinheit (2),
- eine erste Karbonatationseinheit (3),
- eine Abscheideeinheit (4) und
- eine zweite Karbonatationseinheit (6)
und
- eine Sekundäranordnung (B) von Behandlungseinheiten, die enthält:
- ein Mittel, um eine Fraktion von in der Vorkalkungseinheit (1) vorgekalktem Zuckersaft abzuzweigen, die 10 bis 70 Volumenprozent des gesamten vorgekalkten Zuckersafts ausmacht,
- eine Koagulationseinheit (8), der gleichzeitig eine abgezweigte Fraktion vorgekalkten Zuckersafts und ein Koagulationsmittel zugeführt werden,
- eine Dekantiereinheit (9), der der mit einem Ausflockungsmittel versetzte koagulierte Zuckersaft zugeführt wird, um sowohl einen klaren, sekundären Zuckersaft (JCs) als auch Sekundärschlämme abzuscheiden und zurückzugewinnen und
- ein Mittel um den klaren sekundären Zuckersaft in die Hauptanordnung von Behandlungseinheiten entweder vor der ersten Karbonatationseinheit (3) oder zwischen dieser und der zweiten Karbonatationseinheit (6) zurückzuführen.

7. Anlage nach Anspruch 6, **dadurch gekennzeichnet, dass** sie außerdem eine Behandlungseinheit (10) für Sekundärschlämme, um daraus ein Filtrat abzuscheiden und ein Mittel enthält, um dieses Filtrat dem von der Dekantiereinheit (9) abgegebenen, klaren, sekundären Zuckersaft zuzufügen.

8. Anlage nach einem der Ansprüche 6 bis 7, **dadurch gekennzeichnet, dass** die Hauptanordnung (A) von Behandlungseinheiten außerdem eine Sulfitierungseinheit (5) hinter der Abscheideeinheit (4) und vor der zweiten Karbonatationseinheit (6) aufweist und dass das Mittel zur Rückführung des klaren, sekundären Zuckersafts in die Hauptanordnung (A) den klaren, sekundären Zuckersaft vor der Sulfitierungseinheit (5) zurückführt.

## Claims

1. A purification process for a sugar juice, in particular a beet sugar juice, comprising a main sequence of successive processing treatments (A), comprising a pre-liming treatment (1) of the sugar juice, a liming treatment (2) of the pre-limed sugar juice and at least two successive carbonation treatments (3, 6), **characterized in that** it comprises a secondary sequence of treatments (B) comprising:
a) deriving a fraction of the pre-limed juice representing 10 to 70 % in volume of the total pre-limed sugar juice;
b) subjecting the derived fraction of pre-limed sugar juice to a coagulation treatment (8) using a coagulating agent;
c) subjecting the coagulated sugar juice to decantation (9) with the addition of a flocculating agent for separating a secondary clear sugar juice (JCs) from secondary flocs, and
d) recycling the secondary clear sugar juice (JCs) in the main treatment sequence before or after the first carbonation treatment but before the second carbonation treatment.

2. The process according to Claim 1, **characterized in that** the secondary flocs of step c), whether mixed or not with flocs from the first carbonation that were not recycled, are subjected to a filtration treatment in order to extract from them a filtrate that is recycled in the main treatment sequence.

3. The process according to any one of the above claims, **characterized in that** the fraction of derived pre-limed sugar juice represents 10 to 50 % in volume of the total pre-limed sugar juice.

4. The process according to any one of Claims 1 to 3, **characterized in that** the secondary clear sugar juice (JCs) is reintroduced into the main treatment sequence prior to the first carbonation treatment.

5. The process according to any one of Claims 1 to 3, **characterized in that** the main sequence of treatments comprises after the first carbonation treatment and before the second carbonation treatment a sulfitation treatment (5) and **in that** the secondary clear juice is reintroduced into the main treatment sequence after the first carbonation and before the sulfitation treatment.

6. A purification installation for sugar juice for the implementation of the purification process according to any one of the above claims, **characterized in that** it comprises:
- a main system (A) of treatment units comprising a pre-liming unit (1);
- a liming unit (2);
- a first carbonation unit (3)
- a separation unit (4), and
- a second carbonation unit (6) and a secondary system (B) of treatment units comprising:
- a means for deriving a fraction of pre-limed sugar juice into a pre-liming unit (1) representing 10 to 70 % in volume of the total pre-limed sugar juice;
- a coagulation unit (8) simultaneously receiving a derived fraction of pre-limed sugar juice and a coagulating agent;
- a decantation unit (9) receiving the coagulated sugar juice to which a flocculating agent has been added in order to separate and recover on the one hand a secondary clear juice (JCs) and on the other hand secondary flocs, and
- a means for reintroducing the secondary clear juice into the main system of treatment units either upstream of the first carbonation unit (3) or between said latter and the second carbonation unit (6).

7. The installation according to Claim 6, **characterized in that** it comprises in addition a unit for treating (10) the secondary flocs in order to extract from them a filtrate and a means for combining this filtrate with the secondary clear sugar juice from the decantation unit (9).

8. The installation according to any one of Claims 6 to 7, **characterized in that** the main system (A) of treatment units comprises in addition a sulfitation unit (8) downstream of the separation unit (4) and upstream of the second carbonation unit (6) and **in that** the means for introducing the secondary clear juice into the main system (A) reintroduces the secondary clear sugar juice upstream of the sulfitation unit (5).
